# EUROPÄISCHE PATENTSCHRIFT

(11) **EP 0 638 029 B1**
(45) Veröffentlichungstag und Bekanntmachung des Hinweises auf die Patenterteilung: **04.03.1998**
(21) Anmeldenummer: 94904956.3
(22) Anmeldetag: 20.01.1994
(51) Int. Cl.: B60R 19/56

(54) **SCHUTZRAHMENANORDNUNG FÜR STRASSENFAHRZEUGE**
PROTECTION FRAME FOR ROAD VEHICLES
CADRE DE PROTECTION POUR VEHICULES ROUTIERS

(30) Priorität: 02.03.1993 DE 4306371; 26.05.1993 DE 4317479
(43) Veröffentlichungstag der Anmeldung: 15.02.1995
(73) Patentinhaber: SCHIMMELPFENNIG, Karl-Heinz, D-48167 Münster (DE)
(72) Erfinder: SCHIMMELPFENNIG, Karl-Heinz, D-48167 Münster (DE)
(74) Vertreter: Habbel, Hans-Georg, Dipl.-Ing.
(86) Internationale Anmeldenummer: DE9400052
(87) Internationale Veröffentlichungsnummer: WO9420333

(56) Entgegenhaltungen:
- DE-A- 3 503 656
- DE-C- 2 823 951
- FR-A- 2 623 153
- GB-A- 239 023
- US-A- 1 444 558
- US-A- 4 640 527
- US-A- 4 877 266

## Beschreibung

Die Erfindung bezieht sich auf eine Schutzrahmenanordnung für Straßenfahrzeuge.

Aus der DE-C2 28 23 951 ist eine den Freiraum zwischen den Achsen eines Nutzfahrzeuges an beiden Fahrzeugseiten abdeckender, entfernbarer Eindringschutz bekanntgeworden, der etwa in einer durch die äußeren Kanten der Kotflügel über den Rädern der Achsen gelegten Ebene angeordnet ist und der Verkehrsteilnehmer, z. B. Fußgänger, Zweiradfahrer od. dgl., an einem Eindringen in den Freiraum hindern soll. Diese bekannte Schutzvorrichtung weint erhebliche Nachteile auf, da sie nicht in der Lage ist, die Fußgänger- und Zweiradsicherheit zu gewährleisten, d. h. es wird nicht verhindert, daß seitlich aufprallende Verkehrsteilnehmer unter das Fahrzeug geraten und es wird kein Mitreißen verhindert und ein Anprall an vorstehenden Teilen ist weiterhin möglich. Auch bei seitlichen Kollisionen mit einem Personenkraftwagen kann dieser fast ungehindert in den Zwischenraum "Fahrerhaus-Hinterachse" des LKW's eindringen, wobei es unterhalb des LKW's zu einem Aufeinandertreffen der relativ schwachen PKW-Struktur mit dem sehr steif ausgelegten LKW-Rahmen kommt.

Die GB 239 023 beschreibt eine Schutzvorrichtung für Kraftfahrzeuge, durch die bewirkt werden soll, daß dann, wenn eine Person mit dem Fahrzeug kollidiert und hinfällt, diese nicht von den Rädern des Fahrzeuges überrollt werden kann. Wesentlich bei diesem seit 1925 bekannten Vorschlag ist, daß ein übliches Fahrzeug zusätzlich verkleidet wird Hierzu heißt es, daß diese Verkleidung an das übliche Rahmentragwerk des Fahrzeuges anschließt, d. h. also, hier wird keine Schutzrahmenanordnung für Straßenfahrzeuge vorgeschlagen, der anstelle des bisher üblichen Leiterrahmens tritt, sondern die bisher üblichen Konstruktionen werden beibehalten und werden außen mit zusätzlichen Platten und Verkleidungen behängt.

Demgegenüber liegt der Erfindung die Aufgabe zugrunde, eine Schutzrahmenanordnung für Straßenfahrzeuge zu schaffen, die verhindert, daß Fahrzeuge unterschiedlicher Höhe untereinanderfahren können, Personen und Zweiradfahrer unter ein Fahrzeug gerissen werden können und es bei schrägen Anstoßen zum sogenannten 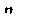 Gleitplankeneffekt" kommt.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird eine Schutzrahmenanordnung z. B. für LKW, Anhänger, LKW-Sattelauflieger und PKW vorgesehen, die sicherheitstechnisch deutliche Vorteile gegenüber den bisher bekannten Einrichtungen aufweist. Die Schutzrahmenanordnung hat zum Vorteil, daß die strukturfesten Teile dort angesetzt werden, wo sie den Bedürfnissen der passiven Sicherheit schwächerer Verkehrsteilnehmer entsprechen, nämlich an der Außenseite des Fahrzeuges und im Hinblick auf die Kompatibilität mit schwächeren Verkehrsteilnehmern in einer vernünftigen Höhe. Für die Belange der passiven Sicherheit ist es weiterhin wünschenswert, die Außenhaut des Fahrzeugs so glatt wie möglich zu gestalten, da es dann bei schrägen Anstößen zum sogenannten "Leitplankeneffekt" kommt. Im Falle einer Kollision "gleitet" das schwächere Fahrzeug an der Außenkante des Plankenrahmens wie an einer Leitplanke ab, so daß es zu einer geringen Geschwindigkeitsänderung kommt. Geringe Geschwindigkeitsänderungen haben geringere Deformationen und damit auch geringere Beschleunigungsbelastungen der Insassen des stoßenden Fahrzeuges zur Folge. Im Gegensatz zur "Knautschzone", die üblicherweise an Front und Heck des Fahrzeuges vorgesehen ist, werden die Seitenpartien des Fahrzeuges nunmehr als "Gleitzone" ausgebildet.

Die Aufgabe, die Außenhaut im kritischen Bereich möglichst steif und glatt zu gestalten, wird schon durch den erwähnten außen liegenden Rahmen gelöst. Die seitlichen Längsträger umfassen in der Draufsicht die Räder des Fahrzeugs und bilden somit eine glatte Oberfläche, die ein Einfahren in den Bereich zwischen die Achsen und ein Verhaken und Mitreißen an vorstehenden Teilen verhindert. Die Erfindung sieht eine Höhe der Unterkante des Rahmens vor, die der Stoßstangenhöhe eines maximal verzögerten durchschnittlichen Personenkraftwagens entspricht. Da ein PKW vor einer Kollision mit einem anderen Verkehrsteilnehmer im allgemeinen stark abgebremst wird, soll diese Rahmenanordnung ein "Untertauchen" z. B. des PKW unter den LKW-Rahmen verhindern. Für die Unterkante des Hauptrahmens ergibt sich für diese Forderung eine Höhe von ca. 30 cm.

Das seitliche Umfassen der Räder hat neben der Unterstützung des Leitplankeneffekts z. B. auch an Bushaltestellen Vorteile. Das engradige Lenkmanöver beim Einfahren in eine Haltestelle erfordert einen relativ großen Einschlagwinkel. Die vordere Lauffläche des kurveninneren Rades ragt entsprechend weit über die restliche Seitenfläche hinaus, wodurch direkt am Omnibus stehende Fußgänger erfaßt und überrollt werden können. Bei Anwendung des Schutzrahmens ist diese Gefährdung für die Fußgänger ausgeschlossen. Hierbei ist es besonders vorteilhaft, daß bei der oder den Lenkachsen sich der Drehpunkt des Rades mit zunehmendem Lenkeinschlag nach innen verlagert.

Ein weiterer Unfallablauf besteht darin, daß Fußgänger und Radfahrer beim Abbiegen seitlich von Nutzfahrzeugen erfaßt, zu Boden geworfen und anschließend überrollt werden. Die Erfahrung mit derartigen Unfällen unter Beteiligung von Omnibussen zeigt, daß bei einer glatten Außenhaut des Fahrzeuges der erste Kontakt für die geschädigte Person verhältnismäßig glimpflich abläuft. Die schweren Verletzungen entstehen in der Regel erst dann, wenn der auf dem Boden liegende Verkehrsteilnehmer unter das Fahrzeug gerät und überrollt wird. Um diesen Unfalltyp zu verhindern, sieht die erfindungsgemäße Schutzrahmenanordnung zusätzlich die Anbringung einer elastischen Schürze unterhalb des Hauptrahmens vor. Die Schürze soll so stabil ausgeführt werden, daß auf dem Boden liegende Personen zur Seite weggedrückt werden und dadurch ein Überrollen verhindert wird, beim Überfahren von Hindernissen aus dem Straßenaufbau heraus aber nachgibt.

Durch die nahezu vollständige Abkoppelung der Reifen nach außen läßt sich durch die unterhalb des Rahmens angebrachte Schürze das Rollgeräusch der Reifen sowie die Sprühnebelbildung ganz erheblich verringern.

Weitere Vorteile im Hinblick auf die passive Sicherheit bietet die erfindungsgemäße Schutzrahmenanordnung bei Auffahrunfällen zwischen zwei LKW's. Bei den heutzutage üblichen LKW- und Anhängerkonstruktionen ist es üblich, die Hinterachsfederung des Zugfahrzeuges seitlich am Hauptrahmen anzubringen, wohingegen die Federung des Nutzfahrzeuganhängers in der Regel an Lagerböcken unterhalb des Rahmens montiert wird. Bei gleicher Größe der Räder von Zugfahrzeug und Anhänger ergibt sich daraus, daß der Anhängerrahmen oberhalb des Zugfahrzeugrahmens liegt. Im Falle eines Auffahrunfalles dringt der höher liegende Hauptrahmen des voraus fahrenden Anhängers in die verhältnismäßig nachgiebige Fahrerkabine des auffahrenden LKW ein und verursacht schon bei geringen Stoßdifferenzgeschwindigkeiten starke Deformationen.

Bei Ausführung der Hauptrahmen nach dem Plankenrahmenprinzip wird ein derartiges Eindringen verhindert, da die Rahmen auf gleicher Höhe liegen und somit aufeinandertreffen.

Aufgrund der höheren mechanischen Belastung durch den normalen Fahrbetrieb ist der Rahmen eines Nutzfahrzeuges im Vergleich zu entsprechenden Strukturen eines PKW stabiler und im Hinblick auf das Crash-Verhalten steifer ausgeführt.

Steife Karosseriestrukturen haben im Crash-Fall geringere Verformungswege und damit große Beschleunigungen des Fahrzeugs zur Folge. Mit den Beschleunigungen steigt gleichfalls die biomechanische Belastung des Fahrzeuginsassen an. Aus diesem Grunde sieht die erfindungsgemäße Hauptrahmenanordnung vor, den Front- und Heckbereich durch Deformationselemente so zu gestalten, daß im Falle einer Kollision kinetische Energie in Verformungsarbeit umgewandelt wird.

Die außenliegende Schutzrahmenanordnung erlaubt nicht nur z. B. den Quereinbau eines Motors in einem LKW, sondern auch durch die jetzt mögliche hohe und gerade Bauweise eine Auslegung des Hauptrahmen profils als Aluminiumstrangpreßprofil.

Um die passive Sicherheit noch weiter zu erhöhen, wird vorgeschlagen, den Plankenrahmen in verschiedene Zonen aufzuteilen, die eine unterschiedliche Strukturfestigkeit aufweisen. Durch diese unterschiedlichen Strukturfestigkeiten wird die Kompatibilität verschiedener Verkehrsteilnehmer untereinander wesentlich erhöht.

Ausführungsbeispiele der Erfindung werden nachfolgend anhand der Zeichnungen erläutert. Die Zeichnungen zeigen dabei in
- Fig. 1: eine Gegenüberstellung eines Kleinlastwagens mit zwei kollidierenden Großlastwagen, in
- Fig. 2: eine Gegenüberstellung eines Personenwagens mit einem Kleinlastwagen, in
- Fig. 3: ein Rahmenprofil eines Schutzrahmens zur Verdeutlichung der Größenverhältnisse und der Strukturzonen, in
- Fig. 4: schematisch die Darstellung eines Zugfahrzeuges und Sattelaufliegers, in
- Fig. 5: eine Seitenansicht auf einen Wohnwagen mit Schutzrahmenanordnung, in
- Fig. 6: eine Draufsicht auf die Rahmenkonstruktion für einen Wohnwagen, in
- Fig. 7: das Vorderteil eines kompressiven Schutzrahmens, in
- Fig. 8: eine abgewandelte Ausführungsform eines kompressiven Schutzrahmens, in
- Fig. 9: das Vorderteil eines Schutzrahmens, der ohne Querlenker ausgebildet ist und ein Abgleiten auffahrender Fahrzeuge ermöglicht, in
- Fig. 10: eine Seitenansicht auf einen Einachsanhänger, in
- Fig. 11: die Draufsicht auf den Einachsanhänger gemäß Fig. 11 und in
- Fig. 12: einen Personenwagen mit einem Schutzrahmen.

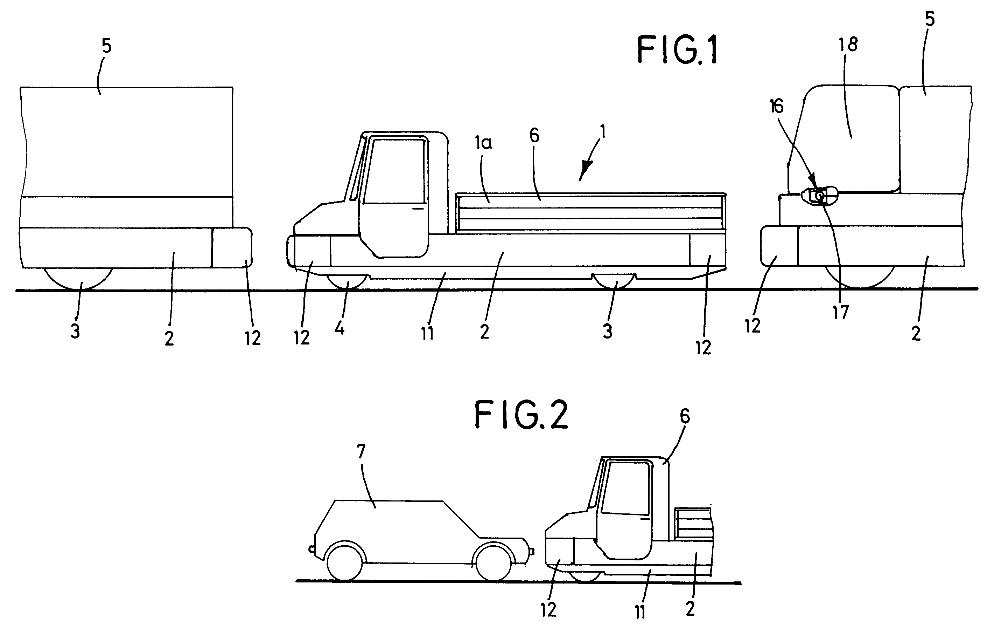

In den Zeichnungen, insbesondere in Fig. 1 und 2, sind mit 1 Fahrzeuge bezeichnet, und zwar mit 6 ein Kleinlastkraftwagen und mit 5 das Rückteil eines Großlastkraftwagens und mit 5 das Vorderteil eines Großlastkraftwagens.

Alle drei Fahrzeuge sind mit einem umlaufenden Rahmen 2 ausgerüstet, der als Schutzrahmen ausgebildet ist und die Vorderräder 4 und Hinterräder 3 umgreift. Bei den Darstellungen in Fig. 1 sind an der Vorder- und Rückseite der Fahrzeuge 5 Deformationselemente 12 angedeutet. Bei der Darstellung in Fig. 2 ist mit 5 das Vorderteil eines Kleinlastkraftwagens 6 und mit 7 ein Personenkraftwagen bezeichnet Während der Personenkraftwagen 7 gemäß Fig. 2 nicht mit einer Schutzrahmenanordnung ausgerüstet ist, weist der Kleinlastkraftwagen 6 wiederum einen Rahmen 2 auf, der an seiner Frontseite mit Deformationselementen 12 versehen ist und der Personenwagen gemäß Fig. 13 einen Rahmen 2.

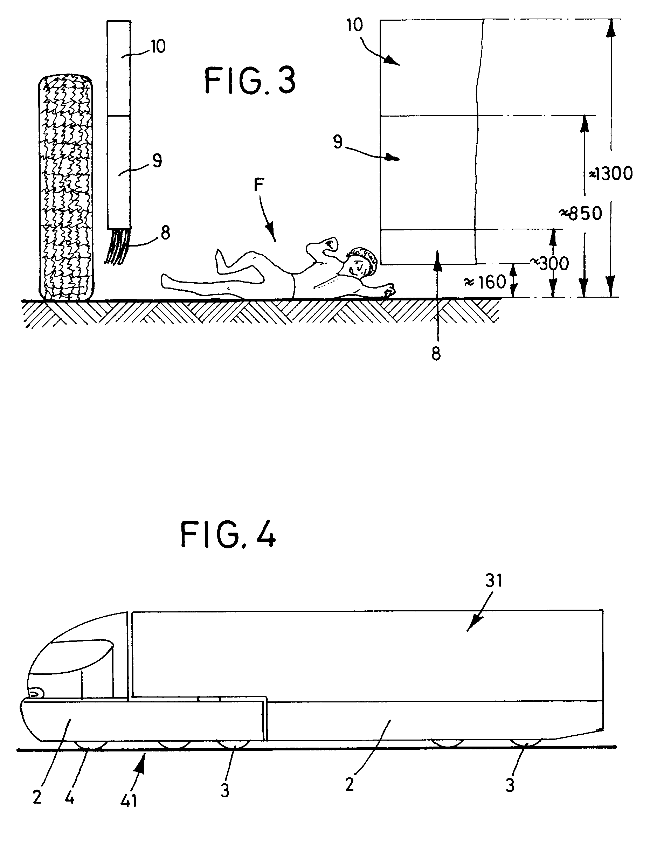

Die Rahmen 2 bei den verschiedenen Fahrzeugen sind so angeordnet, daß die Unterkante des Rahmens 2 etwa mit der Unterkante der Felge des Fahrzeuges übereinstimmt. Zur Verdeutlichung ist in Fig. 3 ein sogenanntes Rahmenprofil dargestellt und es ist erkennbar, daß der untere Bereich 8 bis auf etwa 160 mm über die Bodenoberfläche reicht und eine Gesamthöhe von ca. 140 mm aufweist. Ein mittlerer Bereich 9 weint eine Gesamthöhe von ca. 550 mm auf und der obere Bereich besitzt eine Gesamthöhe von 450 mm, so daß die Rahmenoberkante oberhalb des Erdbodens,d. h. der Fahrbahn, etwa bei 1300 mm liegt, was z. B. der Ladehöhe eines Nutzfahrzeuges entspricht. Der obere Rahmenbereich 10 ist auf jeden Fall sehr hart ausgebildet, während der mittlere Bereich 9 weicher gestaltet werden kann, da er üblicherweise nur mit dem Rahmen 2 von Kleinlastkraftwagen und mit Stoßstangen von PKW's in Kontakt kommt. Der unterste Bereich 8 ist als elastische Schürze 11 (Fig. 1 und 2) ausgebildet, während der Bereich 10 und der Bereich 9 als Hauptrahmen bezeichnet werden. Die elastische Schürze 11 ist so stabil ausgeführt, daß sie eine auf dem Boden liegende Person F zur Seite wegdrückt, so daß dadurch ein Überrollen verhindert wird. Andererseits ist diese elastische Schürze 11 so nachgiebig, daß beispielsweise beim Überfahren irgendwelcher Hindernisse, diese Schürze 11 bei Anstoß nachgeben kann.

Aus der Darstellung in Fig. 1 ist auch bei dem Großlastkraftwagen 5 erkennbar, daß das eigentliche Fahrerhaus 18 mit einem Dämpfer 16, 17 für die Fahrerkabine 18 ausgerüstet ist, die eine Relativbewegung der Fahrerkabine 18 zum Rahmen 2 zuläßt. Im Falle eines Auffahrunfalles auf einen anderen Großlastkraftwagen 5 oder einen feststehenden Gegenstand verringert dieser Dämpfer die Beschleunigungsbelastungen für die Insassen. Eine an der Fahrerkabine 18 befestigte Bremseinrichtung, z. B. eine "Stahlfaust" 17 bewegt sich in der Unfallsituaion zusammen mit der Fahrerkabine 18 nach vorn und gleitet dabei in einen nach vorne enger werdenden Stahltrichter 16. Die Bewegung der Fahrerkabine 18 wird erst langsam, dann schnell er verzögert und schließlich gestoppt.

In Fig. 4 ist ein Sattelauflieger 31 mit Zugfahrzeug 41 dargestellt, der ensprechend den Vorschriften der vorliegenden Patentananmeldung ausgebildet ist, d. h. einen auf sämtliche Räder übergreifenden Rahmen 2 aufweist.

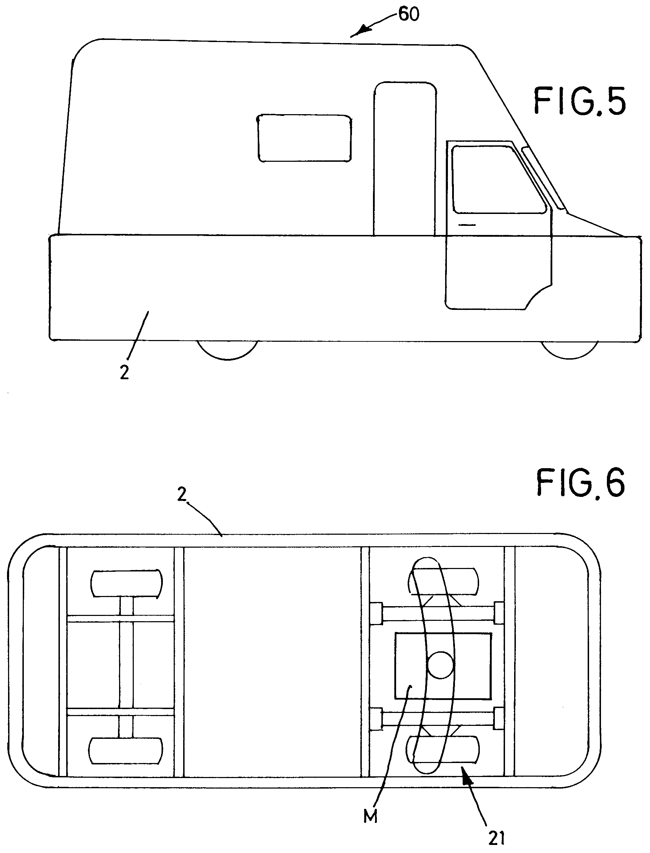

Die Fig. 5 und 6 zeigen die Anwendung des erfindungsgemäßen Gedankens bei einem Wohnwagen 60. Fig. 5 zeigt dabei den Wohnwagen 60 in Seitenansicht und Fig. 6 eine Draufsicht auf die Rahmenkonstruktion 2 des Wohnwagens 60. Hierbei ist der Rahmen 2 nicht nur ein Schutzrahmen, sondern bildet gleichzeitig den Hauptrahmen des Fahrzeuges, wobei in diesen Rahmen ein Zugkopf 21 mit Motor M eingesetzt sein kann und die vorderen und rückwärtigen Teile des Hauptrahmens sind dabei vorzugsweise als Knautschzonen ausgebildet, während die Seitenteile als Gleitzonen wirken.

Durch diese Anordnung wird zum ersten Mal ein Wohnwagen auch im Falle eines Auffahrunfalles verkehrssicher.

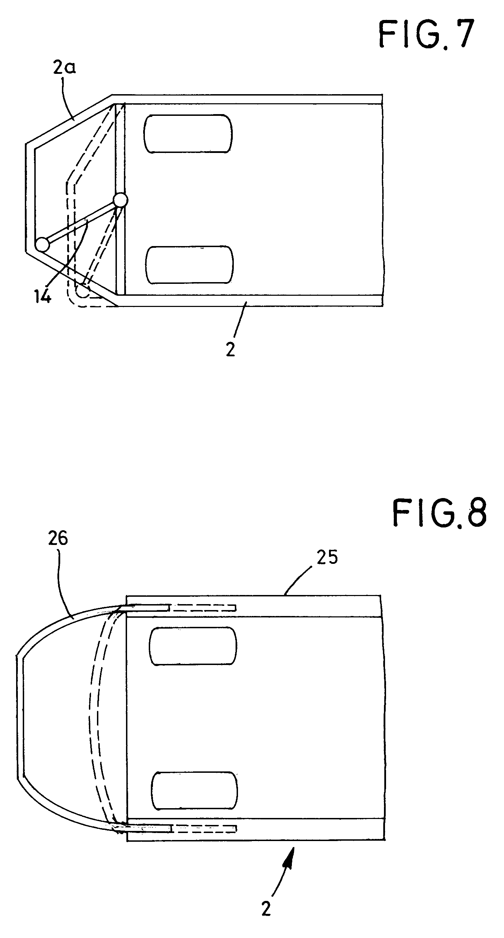

Die Fig. 7 zeigt eine Ausführungsform für einen Rahmen 2, der z. B. in seinem vorderen Bereich bei Auftreffen auf eine Fahrzeug oder festes Hindernis eine solche Verformung bewirkt, daß ein Abgleiteffekt erreicht wird. Hierbei ist in einem Rahmenteil 2a ein Lenker 14 eingesetzt, der bei Kontakt des vorderen Rahmenteiles mit einem Gegenfahrzeug zu einem Verformen der Knautschzone des vorderen Rahmenteiles 2a führt.

In Fig. 8 ist ein Rahmen 2 dargestellt, bei welchem der vordere Rahmenteil 26 sich in einen entsprechend ausgebildeten Rahmenteil 25 einpressen kann.

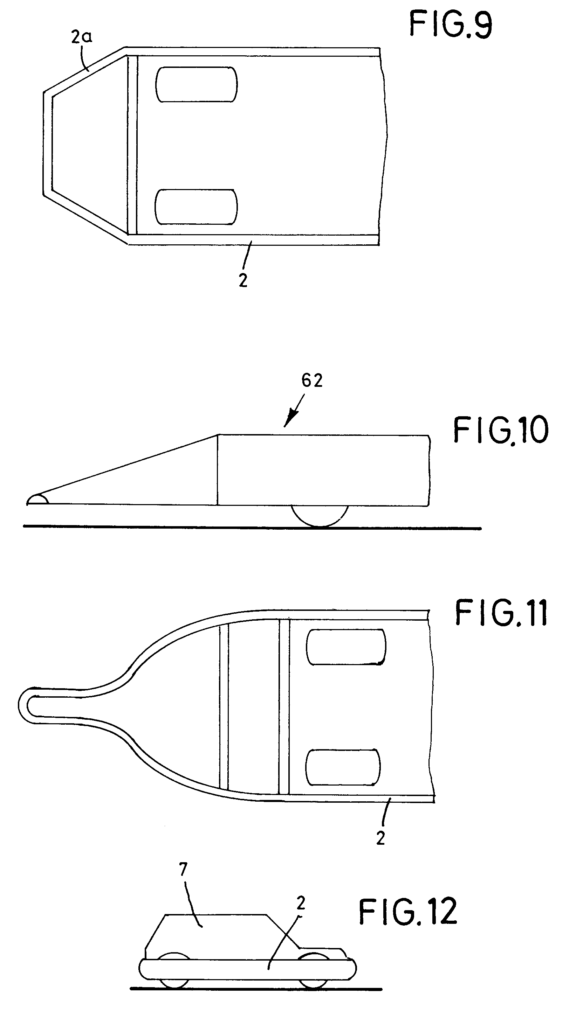

In Fig. 9 ist ein Rahmen dargestellt, der nicht als Verformrahmen ausgebildet ist und damit auf den Lenker 14 verzichtet, sondern der Rahmen ermöglicht ein Abgleiten im Randbereich auffahrender Fahrzeuge.

In Fig. 10 und 11 wird verdeutlicht, daß auch ein normaler Einachsanhänger 62 mit einem Rahmen 2 gemäß der Erfindung ausgerüstet sein kann, ebenso wie der in Fig. 12 dargestellte PKW.

Bei Kollisionen zwischen PKW-Fahrzeugen kommt es nicht zum Eindringen in die Fahrgastzelle. Durch die Rahmenkonstruktion ist es weiterhin nunmehr möglich, einen Personenkraftwagen mit Schiebetüren auszurüsten, da diese an dem Rahmen geführt werden können, so daß auf die insbesondere bei Parkproblemen störenden Klapptüren verzichtet werden kann.

Zusammenfassend ist festzustellen, daß die erfindungsgemäße Schutzrahmenanordnung eine Sicherheitsmaßnahme bietet, die die struktursteifen Teile dort anordnet, wo sie den Bedürfnissen der passiven Sicherheit schwächerer Verkehrsteilnehmer am besten gerecht werden, nämlich an der Außenseite des Fahrzeuges und in einer - im Hinblick auf die Kompatibilität mit schwächeren Verkehrsteilnehmern - vernünftigen Höhe.

Außerdem ist es für die passive Sicherheit wünschenswert, die Außenhaut des Fahrzeuges so glatt wie möglich zu gestalten, da es dann bei schrägen Anstößen zum sogenannten "Leitplankeneffekt" kommt. Das schwächere Fahrzeug, insbesondere ein Personenkraftwagen, rutscht an der glatten Außenfläche wie an einer Leitplanke ab. Dies führt zu einer geringen Geschwindigkeitsänderung und dadurch nur zu geringen Deformationen des Personenkraftwagens und niedrigen Beschleunigungsbelastungen für die Insassen des Fahrzeuges. Diese Aufgabe, die Außenhaut des Straßenfahrzeuges im kritischen Bereich möglichst steif und glatt zu gestalten, wird durch die Anordnung des erfindungsgemäßen Schutzrahmens erreicht.

Die Unterkante des Rahmens mit seinem mittleren Bereich 9 soll sich dabei auf gleicher Höhe wie die Stoßstangen eines vollgebremsten durchschnittlichen Personenkraftwagens befinden, so daß ein Untertauchen des PKW's unter den Schutzrahmen des Nutzfahrzeuges nicht möglich ist. Für die Unterkante des Schutzrahmens ergibt sich eine Höhe von etwa 30 cm bei Nutzfahrzeugen.

Das seitliche Umfassen der Räder, z. B. eines Omnibusses, ist im Hinblick auf die Sicherheit an Haltestellen sinnvoll.

Durch die unterhalb des Schutzrahmens befindliche elastische Schürze 11 wird erreicht, daß sie auf der Straße liegende Personen seitlich wegdrückt. Die elastische Schürze 11 ist dabei so stabil, um die dazu erforderlichen Kräfte aufbringen zu können. Andererseits ist sie elastisch genug, um einen Kontakt des Fahrzeuges zwischen Vorder- und Hinterachse des Fahrzeuges gelegenen Fahrbahnunebenheiten aufzufangen.

## Patentansprüche

1. Schutzrahmenanordnung für Straßenfahrzeuge wobei:
a) der Rahmen (2) in der Draufsicht die Außenabmessungen des Fahrzeuges (1) besitzt und wenigstens die Hinterräder (3) des Fahrzeuges (1) seitlich umfaßt,
b) der Rahmen (2) - aus Stahl oder Leichtmetallstrangpreßprofilen hergestellt - einen wesentlichen Teil der Strukturfestigkeit des Fahrzeuges (1) erbringt,
c) der Rahmen von der Rahmenhöhe eines Großlastkraftwagens (5) bis nahe zur Unterkante der Felge reicht,
d) der Rahmen (2) an der Front und am Heck mit Deformationselementen (12) besetzt oder aber selbst deformierbar ist, wobei das Deformationsverhalten derart ausgelegt ist, daß eine erhebliche Deformation im oberen Bereich (10) erst durch Kräfte erfolgt, wie sie bei Stößen zwischen zwei etwa gleichschweren Nutzfahrzeugen (5) auftreten und im mittleren Bereich durch Kräfte (9) bewirkt wird, wie sie bei Stößen mit PKW's (7) auftreten.

2. Schutzrahmenanordnung nach Anspruch 1, dadurch gekennzeichnet, daß der Rahmen (2) in der Höhe gesehen in unterschiedliche Strukturzonen unterteilt ist , wobei der unterste Bereich (8) als elastische Schürze ausgebildet ist.

3. Schutzrahmenanordnung nach Anspruch 1 oder 2 dadurch gekennzeichnet, daß der unterste Bereich (8) des Rahmens (2), d. h. also die elastische Schürze (11), bis auf die Höhe, in der sich der Körperschwerpunkt eines auf der Fahrbahn liegenden Fußgängers (F) befindet, vorzugsweise also etwa 10 bis 18 cm, herabreicht.

4. Schutzrahmenanordnung nach einem der vorhergehenden Ansprüche, dadurch gekennzeichnet, daß der Rahmen in den Eckbereichen abgeschrägt ist, um z. B. bei Frontalkollision mit geringer Überdeckung eine Streifkollison zu bewirken.

5. Schutzrahmenanordnung nach einem der vorhergehenden Ansprüche, dadurch gekennzeichnet, daß zur Erreichung einer sicheren Kompatibilität eine Höhenregulierung für den Rahmen (2) vorgesehen ist.

6. Schutzrahmenanordnung nach einem der vorhergehenden Ansprüche, dadurch gekennzeichnet, daß im Bereich der Räder (3, 4) der Rahmen (2) abnehmbar ausgebildet ist.

7. Schutzrahmenanordnung nach einem der vorhergehenden Ansprüche, dadurch gekennzeichnet, daß auf Basis des außen liegenden Hauptrahmens das Nutzfahrzeug selbst als Container ausgebildet ist.

8. Schutzrahmenanordnung nach einem der vorhergehenden Ansprüche, dadurch gekennzeichnet, daß der Rahmenbereich im seitlichen Bereich mit zusätzlichen Erkennungsmitteln ausgerüstet ist.

9. Schutzrahmenanordnung nach einem der vorhergehenden Ansprüche, dadurch gekennzeichnet, daß bei landwirtschaftlichen Fahrzeugen und Baustellenfahrzeugen der Aufbau im Gelände angehoben werden kann, um die erforderliche Bodenfreiheit zu gewährleisten oder der mittlere und/oder untere Schutzrahmenbereich (9, 8) abgeklappt, hochgeklappt oder abgenommen werden können.

10. Schutzrahmenanordnung nach einem der vorhergehenden Ansprüche, dadurch gekennzeichnet, daß die Rahmenanordnung auch auf den Zuggabelbereich eines Anhängers ausgedehnt ist.

11. Schutzrahmenanordnung nach einem der vorhergehenden Ansprüche, dadurch gekennzeichnet, daß ein diagonal eingebauter Lenker (14) im Front- und/oder Heckbereich bei Kollisionen einen Abgleiteffekt auftreffender Fahrzeuge fördert (Fig. 8).

12. Schutzrahmenanordnung nach einem der vorhergehenden Ansprüche, dadurch gekennzeichnet, daß der Übergang zwischen dem vorderen (26) und seitlichen Rahmenbereich (25) so gestaltet ist, daß ein Ineinanderdrücken mit Energieumwandlung ermöglicht wird.

## Claims

1. A protective frame arrangement for road vehicles, wherein
a) in plan view, the frame (2) exhibits the external dimensions of the vehicle and laterally encloses at least the rear wheels of the vehicle (1),
b) the frame (2) - made of steel or extruded light metal sections - provides a substantial proportion of the structural stability of the vehicle (1),
c) the frame extends from the height above the ground of the chassis of a heavy goods vehicle (5) to close to the bottom edge of the wheel rim,
d) the frame (2) at the front and tail is provided with deformation elements (12) or is itself deformable, the deformation behaviour being so designed that considerable deformation occurs in the upper area (10) only as a result of forces which arise in the case of impact between two commercial vehicles of approximately equal weight and is effected in the middle area by forces (9) which arise in the case of impact with private cars (7).

2. A protective frame arrangement according to claim 1, characterised in that, when viewed over its height, the frame (2) is subdivided into different structural zones, the lowest area (8) being constructed as a resilient apron.

3. A protective frame arrangement according to claim 1 or claim 2, characterised in that the lowest area (8) of the frame (2), i.e. the resilient apron (11), extends downwards to the level of the centre of gravity of the body of a pedestrian (F) lying in the road, preferably therefore approximately 10 to 18 cm.

4. A protective frame arrangement according to any one of the preceding claims, characterised in that the frame is bevelled in the corner areas in order to effect a glancing collision in the case of a frontal collision with slight overlap.

5. A protective frame arrangement according to the preceding claims, characterised in that, to achieve reliable compatibility, a height regulation means is provided for the frame (2).

6. A protective frame arrangement according to any one of the preceding claims, characterised in that the frame (2) is of removable construction in the area of the wheels (3, 4).

7. A protective frame arrangement according to any one of the preceding claims, characterised in that, using the external main frame as a base, the commercial vehicle itself is constructed as a container.

8. A protective frame arrangement according to any one of the preceding claims, characterised in that the frame area is provided with additional identifying means in the side area.

9. A protective frame arrangement according to any one of the preceding claims, characterised in that, in the case of agricultural vehicles and construction vehicles, the structure may be raised when off-road in order to ensure the necessary ground clearance or the middle and/or lower protective frame area (9, 8) may be folded down or up or removed.

10. A protective frame arrangement according to any one of the preceding claims, characterised in that the frame arrangement is also extended to the forked tow-bar area of a trailer.

11. A protective frame arrangement according to any one of the preceding claims, characterised in that a diagonally mounted rod (14) in the front and/or tail area ensures that impacting vehicles slide off when collisions occur (Fig. 8).

12. A protective frame arrangement according to any one of the preceding claims, characterised in that the transition between the front (26) and lateral (25) frame areas is such that they may be pressed into one another, thereby providing energy conversion.

## Revendications

1. Cadre de protection pour véhicules routiers, dans lequel :
a) le cadre (2) vu de dessus a les dimensions extérieures du véhicule (1) et contient latéralement au moins les roues arrière (3) du véhicule (1),
b) le cadre (2), fabriqué en acier ou à partir de profilés filés en métal léger, fournit une partie importante de la résistance de structure du véhicule (1),
c) le cadre s'étend depuis la hauteur de cadre d'un poids lourd (5) jusqu'à proximité du bord inférieur de la jante,
d) le cadre (2) est pourvu sur l'avant et sur l'arrière d'éléments de déformation (12) ou bien est déformable lui-même, le comportement vis-à-vis de la déformation étant conçu de telle manière qu'une déformation importante dans la zone supérieure (10) ne se produit que sous l'action de forces qui surviennent en cas de chocs entre deux véhicules utilitaires (5) à peu près du même poids et est provoquée dans la zone centrale par des forces comme celles qui surviennent en cas de chocs avec des voitures (7).

2. Cadre de protection selon la revendication 1, caractérisé en ce que le cadre (2) est subdivisé dans le sens de la hauteur, en différentes zones de structure, la zone (8) la plus inférieure étant conçue comme un tablier élastique.

3. Cadre de protection selon la revendication 1 ou 2, caractérisé en ce que la zone (8) la plus inférieure du cadre (2), c'est-à-dire donc le tablier (11) élastique, descend jusqu'à la hauteur où se trouve le centre de gravité du corps d'un piéton (F) situé sur la chaussée, de préférence donc à environ 10 à 18 cm.

4. Cadre de protection selon l'une quelconque des revendications précédentes, caractérisé en ce que le cadre est en biseau dans les zones d'angle, afin de provoquer une collision par effleurement, par exemple en cas de collision frontale avec un faible recouvrement.

5. Cadre de protection selon l'une quelconque des revendications précédentes, caractérisé en ce qu'il est prévu un réglage en hauteur pour le cadre (2) pour obtenir une compatibilité certaine.

6. Cadre de protection selon l'une quelconque des revendications précédentes, caractérisé en ce que le cadre (2) est conçu de façon amovible dans la zone des roues (3, 4).

7. Cadre de protection selon l'une quelconque des revendications précédentes, caractérisé en ce que, sur la base du cadre principal situé à l'extérieur, le véhicule utilitaire est conçu comme un conteneur.

8. Cadre de protection selon l'une quelconque des revendications précédentes, caractérisé en ce que la zone du cadre est équipée dans la zone latérale de moyens de reconnaissance supplémentaires.

9. Cadre de protection selon l'une quelconque des revendications précédentes, caractérisé en ce que, pour des véhicules agricoles et des engins de chantier, la carrosserie peut être soulevée sur le terrain afin de garantir la garde au sol indispensable ou bien la zone centrale/ou la zone inférieure du cadre de protection (9, 8) peut être basculée, relevée ou enlevée.

10. Cadre de protection selon l'une quelconque des revendications précédentes, caractérisé en ce que le cadre de protection est étendu également à la zone de la fourche d'attelage d'une remorque.

11. Cadre de protection selon l'une quelconque des revendications précédentes, caractérisé en ce qu'un bras oscillant (14) monté en diagonale dans la zone avant et/ou la zone arrière favorise en cas de collision un effet de glissement sur des véhicules qui se percutent (figure 8).

12. Cadre de protection selon l'une quelconque des revendications précédentes, caractérisé en ce que la transition entre la zone de cadre avant (26) et la zone de cadre latérale (25) est conçue de façon à permettre une compression par emboîtement avec conversion de l'énergie.
